(19) Europäisches Patentamt
European Patent Office
Office européen des brevets

(11) **EP 1 673 256 B1**

(12) **FASCICULE DE BREVET EUROPEEN**

(45) Date de publication et mention de la délivrance du brevet:
**23.01.2013 Bulletin 2013/04**

(21) Numéro de dépôt: **04805734.3**

(22) Date de dépôt: **07.10.2004**

(51) Int Cl.:
*B60N 2/64* *(2006.01)*　　　*B60N 2/48* *(2006.01)*

(86) Numéro de dépôt international:
**PCT/FR2004/050491**

(87) Numéro de publication internationale:
**WO 2005/032880 (14.04.2005 Gazette 2005/15)**

(54) **ENSEMBLE DE DOSSIER DE SIEGE POUR VEHICULE AUTOMOBILE**

SITZLEHNENANORDNUNG FÜR KRAFTFAHRZEUG

MOTOR VEHICLE SEATBACK ASSEMBLY

(84) Etats contractants désignés:
**AT BE BG CH CY CZ DE DK EE ES FI FR GB GR HU IE IT LI LU MC NL PL PT RO SE SI SK TR**

(30) Priorité: **07.10.2003 FR 0311723**

(43) Date de publication de la demande:
**28.06.2006 Bulletin 2006/26**

(73) Titulaire: **Renault s.a.s.**
**92100 Boulogne Billancourt (FR)**

(72) Inventeurs:
• **PIMORT, Isabelle**
**F-78180 Montigny le Bretonneux (FR)**
• **BENDJELLAL, Farid**
**F-92500 Rueil Malmaison (FR)**

(56) Documents cités:
| | |
|---|---|
| **EP-A- 0 359 962** | **EP-A- 0 865 960** |
| **EP-A- 1 029 736** | **EP-A- 1 270 316** |
| **DE-A- 2 652 808** | **DE-A- 3 843 616** |
| **DE-A- 3 900 495** | **DE-A- 10 215 137** |
| **DE-A- 19 800 078** | **DE-A- 19 910 666** |
| **DE-A- 19 923 909** | **DE-A1- 10 062 511** |
| **DE-U- 9 312 512** | **FR-A1- 2 414 415** |
| **GB-A- 2 012 570** | **US-A- 5 580 124** |
| **US-A- 5 826 937** | **US-A- 6 022 074** |
| **US-A- 6 088 640** | **US-A1- 2002 043 860** |
| **US-A1- 2003 001 413** | **US-A1- 2003 057 748** |
| **US-B1- 6 213 548** | |

EP 1 673 256 B1

## Description

La présente invention concerne un ensemble de dossier de siège pour véhicule automobile.

Lorsqu'un véhicule automobile est heurté par l'arrière, la tête d'un occupant assis sur un siège est projetée en arrière relativement à ce siège et vient heurter l'appui-tête. Lors d'un tel choc, les accélérations subies par la tête sont la source de traumatismes, notamment au niveau du coup de l'occupant.

Pour améliorer la protection des occupants, on peut prévoir des appuis-tête dits « actifs » présentant une position d'usage normal et une position de sécurité, dans laquelle une surface d'appui de l'appui-tête est déplacée vers l'avant de façon à venir soutenir au plus tôt la tête de l'occupant en cas de choc. Le déplacement de la surface d'appui est obtenu à l'aide d'actionneurs et d'éléments de déclenchement comportant notamment des capteurs de chocs. Pour plus de détails, on pourra se reporter par exemple aux documents DE 199 23 909 (GRAMMER AUTOMOTIVE) et DE 39 00 495 (BMW).

Néanmoins, de tels dispositifs sont croûteux car ils nécessitent la mise en place d'actionneurs et de dispositifs de déclenchement. Chacun de ces éléments peut nuire à la fiabilité et l'efficacité du système. Le dispositif peut se déclencher dans des situations non-appropriées.

On connaît par le document EP 0 865 960 un siège pour véhicule automobile muni d'un appui-tête intégré dans un dossier, le siège étant fixé avec des moyens de guidage forcé pour provoquer, en cas de choc, un mouvement du dossier et d'une assise du siège avec un déplacement vers l'avant de l'appui-tête permettant de venir soutenir la tête pour limiter des traumatismes. Ce dispositif est compliqué et nécessite la réalisation de moyens de guidage coûteux.

Du document, US 5580124, on connaît un ensemble de dossier de siège, qui montre les caractéristiques du préambule de la revendication 1.

La présente invention a pour objet un ensemble de dossier de siège pour véhicule automobile qui permet de limiter les traumatismes subis par un occupant en cas de choc, qui est simple, de fabrication aisée, et de coût de fabrication faible.

L'invention a également pour objet un ensemble dossier de siège pour véhicule automobile fiable et sans possibilité de déclenchement intempestif ou inapproprié.

Un tel ensemble de dossier de siège pour véhicule automobile comprenant les caractéristiques de la revendication 1. Selon un aspect de l'invention, une garniture de dossier et une de garniture d'appui-tête sont telles qu'une différence entre une distance de dos, séparant le dos d'un occupant de la structure rigide de dossier, et une distance de tête, séparant la tête de l'occupant de la structure rigide de l'appui-tête, est inférieure, en valeur absolue, à un seuil déterminé, de façon que, en cas de choc arrière subi par le véhicule, la tête et le corps de l'occupant sont bloqués par le dossier et l'appui-tête sensiblement au même instant.

D'après ce qui a été constaté, en conditions normales de conduite, l'occupant ou conducteur d'un véhicule automobile maintient sa tête à distance de l'appui-tête. Lors d'un choc par l'arrière, le dos de l'occupant, généralement appuyé sur la garniture de dossier, s'enfonce dans la garniture de dossier, alors que la tête de l'occupant est d'abord projetée vers l'arrière sans rencontrer de résistante, et vient heurter l'appui-tête. Suivant la violence du choc, le dos et la tête rencontrent finalement les structures rigides de dossier et d'appui-tête, et subissent alors des accélérations importantes. Selon que le dos rencontre la structure rigide de dossier avant ou après que la tête ne rencontre la structure rigide d'appui-tête, le dos et la tête subissent des accélérations très différentes. Des contraintes importantes apparaissent alors dans le cou du passager situé entre le thorax et la tête du fait des différences d'accélération.

L'adaptation des garnitures de dossier et d'appui-tête afin d'obtenir des distances de dos et de tête sensiblement égales, et en tous cas inférieures à un seuil déterminé de façon que, en cas de choc arrière subi par le véhicule, la tête et le corps de l'occupant sont bloqués par le dossier et l'appui-tête sensiblement au même instant, permet de limiter des différences d'accélération entre le dos et la tête d'un occupant. En effet, le dos et la tête d'un occupant rencontreront des obstacles rigides sensiblement au même instant ou à des instants proches, limitant ainsi l'apparition d'une différence entre les accélérations subies par la tête et le dos. L'ensemble de dossier selon l'invention constitue un organe passif de protection du passager ne nécessitant pas de capteur particulier, ni de mécanisme de déclenchement, assurant ainsi sa simplicité, sa fiabilité et son efficacité.

En vue de la conception de l'ensemble de dossier, pour déterminer des distances entre des parties du corps d'un occupant et la garniture d'un siège ou la structure rigide de ce siège, on utilise un mannequin de référence simulant un occupant assis sur un siège. Il existe en effet des mannequins destinés à effectuer des telles mesures sur les sièges de véhicules automobiles, ainsi qu'une norme pour les mesures effectuées sur les sièges automobiles, référencée SAE J826 (SAE Standard Vol. 3 1999). Un type de mannequin connu destiné à effectuer de telles mesures est désigné comme « machine de mesure de point H ». Par ailleurs, un dispositif de mesure de distance entre une tête de mannequin et un appui-tête, adaptable sur un mannequin de mesure de point « H », représentant le centre des hanches, a été développé. Ce dispositif, désigné HRMD (« Head Restrain Mesuring Device » : dispositif de mesure pour appui-tête) comporte une unité simulant une tête et positionnable sur un mannequin de mesure de point « H », l'unité étant muni d'une sonde apte à déterminer une distance séparant l'unité de l'appui-tête du siège sur lequel est assis le mannequin.

Une procédure de mesure utilisant le dispositif HRMD a été proposée par l'association RCAR (Resarch Council for Automobile Repairs).

Pour tenir compte de la présence des garnitures, on utilise, comme distance de dos et distance de tête, des distances équivalentes déterminées en fonction d'une distance séparant le dos ou la tête de la garniture de dossier ou d'appui-tête, d'une épaisseur de garniture de dossier ou d'appui-tête, et d'un taux de compression de la garniture de dossier ou d'appui-tête. En effet, des efforts importants sur la tête ou le dos du passager peuvent apparaître non pas par contact direct entre la structure du siège et l'organe de l'occupant, mais parce que la garniture située entre le passager et la structure rigide est fortement comprimé et oppose une résistance importante au déplacement de l'occupant et forme un obstacle quasi-rigide.

Dans un mode de réalisation, une distance équivalente de dos est égale à la somme d'une distance séparant le dos et la garniture de dossier et d'une épaisseur de garniture pondérée par un taux de compression du matériau de garniture de dossier.

La distance équivalente de dos est de préférence déterminée à la hauteur où la distance entre le dos et la structure rigide de dossier est la plus petite.

Dans un mode de réalisation, une distance équivalente de tête est égale à la somme d'une distance séparant la tête et la garniture de d' appui-tête et d'une épaisseur de garniture pondérée par un taux de compression du matériau de garniture d'appui-tête.

La distance équivalente de tête est de préférence déterminée à la hauteur où la distance entre la tête et la structure rigide de dossier est la plus petite.

Les matériaux de garniture d'appui-tête et de dossier peuvent être différents, auquel cas leurs taux de compression maximale sont éventuellement différents. On peut notamment prévoir que la souplesse de garniture du dossier dans une partie supérieure soit plus élevée que la souplesse de garniture du dossier dans une partie inférieure, pour limiter un effort de retenue du dos lorsque celui-ci s'enfonce dans la garniture en cas de choc arrière. Ceci permet de limiter une différence d'accélération trop importante entre le dos et la tête pendant une première phase où la tête n'a pas atteint l'appui-tête alors que le dos s'enfonce dans la garniture de dos.

La présente invention et ses avantages seront mieux compris à l'étude de la description détaillée illustrée par les figures annexées, sur lesquelles :

- la figure 1 est une vue schématique de côté d'un ensemble de dossier de siège selon un aspect de l'invention avec un occupant assis sur le siège ; et
- la figure 2 est une vue schématique des accélérations subies par le thorax et la tête d'un occupant en cas de choc arrière.

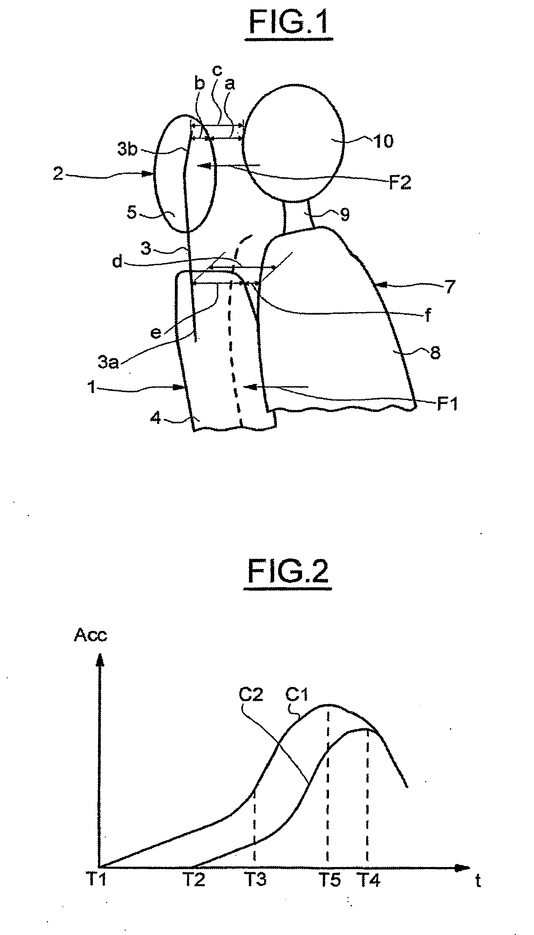

Sur la figure 1, un siège représenté partiellement comprend un dossier 1 et un appui-tête 2. Le dossier 1 comprend une structure rigide 3 recouverte par une garniture de dossier 4. La structure rigide 3, fixée dans le dossier en un point de fixation 3a, se prolonge vers le haut au-delà d'une garniture de dossier, et la portion supérieure 3b de la structure rigide 3 forme une structure rigide pour l'appui-tête 2 recouverte par une garniture d'appui-tête 5.

La partie supérieure d'un passager 7 assis sur le siège est représentée schématiquement. On peut distinguer la partie supérieure du thorax 8 du passager, le cou 9 du passager, et la tête 10.

Conformément à l'attitude généralement adoptée par les passagers ou conducteurs, le passager 7 est représenté de façon que son thorax 8 est en appui sur le dossier 1, et que sa tête 10 se situe à distance de l'appui-tête 2.

La distance la plus courte, selon une direction sensiblement horizontale, entre le dos du passager et la structure rigide de dossier 3 est désignée par la suite distance de dos d. La distance de dos d correspond à la somme de l'épaisseur de garniture de dos e et de la distance entre le dos et la surface extérieure de la garniture de dossier f, prises à hauteur de la distance minimale entre le dos et la structure rigide 3 de dossier 1. Sur la figure 1, la flèche illustrant la distance de dos d a été décalée pour des raisons de clarté du dessin. Dans le cas où le dos n'est pas en appui sur la garniture de dossier à la hauteur de la distance minimale entre le dos et la structure rigide 3 de dossier 1, la distance f prend une valeur positive. Dans le cas où le dos est en appui sur la garniture de dossier 4 à la hauteur de la distance minimale entre le dos et la structure rigide de dossier, la distance f prend une valeur négative et correspond en fait à une distance d'enfoncement du dos dans la garniture de dossier 4. La distance de dos d est déterminée par l'équation (E1) suivante :
d = e + f

Une distance équivalente de dos D_dos est déterminée par l'équation (b) suivante : D_dos = f + $\delta_1$.e, où $\delta_1$ correspond à un taux de compression de la garniture de dossier. Comme valeur significative de $\delta_1$, on peut choisir une mesure statique du taux de compression de la garniture du dossier réalisée sur le dossier, en appliquant un faux dos sur le dossier avec une force horizontale de l'ordre de 400 daN d'enfoncement du faux dos dans le dossier, et en mesurant le déplacement du faux dos. On peut également utiliser comme valeur de $\delta_1$ le taux de compression maximal de la garniture déterminé en jonction des caractéristiques connues de la garniture. A défaut, on peut choisir une valeur représentative du taux de compression maximal des mousses utilisées dans les sièges de véhicule automobile, cette valeur étant comprise entre 0,5 et 1, et en particulier approximativement égale à 0,7. La valeur 1 correspond au cas où on considère que la distance équivalente D_dos est égale la distance de dos d sans tenir compte du taux de compression de la garniture.

La distance la plus courte, selon une direction sensiblement horizontale, entre la partie arrière de la tête 10 et la structure rigide 3d de l'appui-tête 2 est désignée par la suite distance de tête c. La distance de tête c correspond à la somme de la distance a entre la tête et la surface extérieure de la garniture de tête et de l'épaisseur b de la garniture de tête, prises à hauteur de la distance minimale entre la tête et la structure rigide 3d d'appui-tête 2. La distance de tête c est déterminée par l'équation (E2) suivante : $c = a + b$.

Une distance équivalente de tête D_tête est déterminée par l'équation (d) suivante: $a + \delta_2 b$, où $\delta_2 b$ correspond à un taux de compression de la garniture d'appui-tête. Comme valeur significative de $\delta_2 b$, on peut choisir une mesure statique du taux de compression de la garniture d'appui-tête réalisée en appliquant une fausse tête sur le dossier avec une force horizontale d'enfoncement de la fausse tête dans l'appui-tête, de l'ordre de 100 daN, et en mesurant l'enfoncement de la tête dans l'appui-tête. On peut également utiliser comme valeur de $\delta_2 b$ le taux de compression maximal déterminé en fonction des caractéristiques connues de la garniture d'appui-tête. A défaut, on peut utiliser une valeur représentative du taux de compression des mousses utilisées dans les sièges de véhicule automobile, cette valeur étant comprise entre 0,5 et 1, et en particulier approximativement égale à 0,7. La valeur 1 correspond au cas où on considère que la distance équivalente D_tête est égale la distance c.

En cas de choc par l'arrière subi par un véhicule automobile dans lequel est disposé le siège sur lequel se situe l'occupant, le thorax 8 et la tête 10 de l'occupant sont projetés vers l'arrière comme représenté par les flèches F1, F2. Le corps de l'occupant s'enfonce dans la garniture de dossier 4 en direction de la structure rigide 3 du dossier 1, comme cela est représenté par un trait pointillé symbolisant le dos de l'occupant en position enfoncé, quasiment en contact avec la structure rigide 3 du dossier 1.

Conformément à l'invention, la différence entre la distance équivalente de dos D_dos et la distance équivalente de tête D-tête est inférieure, en valeur absolue, à un seuil déterminé S, c'est à dire que ces grandeurs vérifient la relation (E3) suivante : $Abs(D\_tête - D\_dos) < S$

Ainsi, en cas de choc par l'arrière, le thorax 8 et la tête 11 du passager se déplacent vers l'arrière en rencontrant un obstacle « rigide », constitué par la structure rigide et la garniture comprimée, sensiblement au même instant. Des différences importantes d'accélération entre la tête et le dos de l'occupant sont limitées, et des contraintes apparaissant dans le cou sont limitées.

Le seuil critique S qui peut être choisi dépend de valeurs de contraintes acceptables par un occupant pour éviter l'apparition de traumatismes importants irréversibles. Un seuil critique S envisageable est de l'ordre de grandeur de 0 à 30 mm.

Lors de la conception du siège, afin de vérifier si l'ergonomie du siège et la disposition et la constitution des garnitures permettent de vérifier l'équation (E3), on peut procéder de la façon suivante.

On positionne le siège en ajustant les différents réglages à la position nominale spécifiée par le constructeur, ou à défaut en milieu de plage de réglage. Ceci est valable notamment pour le réglage de la position longitudinale d'une assise du siège sur ses glissières, le réglage de la hauteur d'assise, et de l'inclinaison du dossier. Pour un réglage de soutien lombaire, on pourra prévoir un réglage à valeur nominale, ou à défaut un réglage de soutien minimal. Pour un réglage en profondeur de l'appui-tête, on pourra prévoir un réglage en position nominale, ou à défaut, en milieu de plage de réglage.

Ensuite, on effectue des mesures sur le siège à l'aide d'un mannequin du type machine de mesure de point H, représentant le centre des hanches, mentionnée auparavant, disposé sur le siège conformément à la norme SAE J826 également mentionnée auparavant. Grâce au mannequin, on peut déterminer l'angle entre le bassin et le torse du mannequin, et régler l'inclinaison du dossier du siège de façon à obtenir un angle proche d'une valeur nominale spécifiée par le constructeur. A défaut, on pourra choisir un angle de 20 à 30°, en particulier un angle d'environ 25°.

En équipant le mannequin d'un dispositif HRMD de mesure d'appui-tête, on peut régler la position en hauteur de l'appui-tête. Pour ce faire, on choisit la position nominale de l'appui-tête, ou à défaut une position où le sommet de l'appui-tête est sensiblement à la même hauteur que le sommet de la tête simulée par le dispositif de mesure HRMD.

Une fois le siège réglé et le mannequin positionné, on mesure avec précision la position du point H et l'angle entre le bassin et le torse du mannequin fournis par le mannequin et définis dans la norme SAE J826, la position du centre de gravité de la tête, et la distance entre la tête et la garniture d'appui-tête données par le dispositif de mesure HRMD.

Les mesures réalisées avec le mannequin permettent de déterminer de façon représentative la position adoptée par un occupant sur le siège de véhicule automobile, avec l'attitude du mannequin, en tenant compte de son enfoncement dans les garnitures de siège.

Ensuite, on numérise la forme tridimensionnelle arrière du dos du mannequin « machine de mesure point H » équipé du dispositif de mesure HRMD. Ces opérations de numérisation tridimensionnelles peuvent être effectuées à l'aide de logiciels connus en eux-même.

Ensuite, on retire le mannequin sans modifier les réglages de siège, et on numérise la forme tridimensionnelle de la surface extérieure du siège. Toujours sans modifier les réglages du siège, on ôte la garniture de dossier et on numérise la forme tridimensionnelle de la structure rigide du dossier, en incluant les pièces métalliques et les armatures plastiques rigides. Ensuite, encore sans modifier les réglages de siège, on ôte la garniture d'appui-tête et on numérise la forme tridimensionnelle de la structure rigide d'appui-tête en incluant toutes les pièces métalliques et les armatures plastiques rigides qui pourraient constituer des obstacles rigides.

Une fois ces différentes données numériques acquises, on peut utiliser un logiciel de conception assistée par ordinateur pour réunir ces différentes données de façon à reconstruire numériquement le siège avec le mannequin assis sur le siège. La position exacte du mannequin est fournie pas les mesures de position de point H et d'angle de torse. Avec l'outil de conception assistée par ordinateur, on peut ensuite déterminer les distances utiles (a, b, e, f) pour déterminer si la relation (E3) est bien vérifiée lorsque le mannequin de référence « machine de mesure point H » est disposé sur le siège.

La figure 2, qui est décrite par la suite en conservant les références utilisées pour la figure 1, comporte un graphique sur lequel est reporté en axe des abscisses le temps et en axe des ordonnés l'accélération.

Une première courbe C1 représente l'accélération subie par le thorax 8, une deuxième courbe C2 représentant l'accélération subie par la tête 10, en cas de choc par l'arrière subit par un véhicule dans lequel est situé un siège muni d'un ensemble de dossier conforme à l'invention et sur lequel est assis un occupant.

Entre un instant initial $T_1$, correspondant à un choc subi à l'arrière du véhicule et un second instant $T_2$, l'accélération, subie par la tête est sensiblement nulle. Cet intervalle de temps correspond au déplacement de la tête 10 vers l'arrière relativement à l'appui-tête alors que la tête 10 n'est pas encore entrée en contact avec l'appui-tête 2. Ensuite, entre le second instant $T_2$ et un troisième instant $T_3$, l'accélération subie par la tête 10 varie linéairement en augmentant , avec une première pente. L'intervalle de temps entre le second instant $T_2$ et le troisième instant $T_3$ correspond à l'enfoncement de la tête vers l'arrière dans la garniture d'appui-tête 5. L'effort subi par la tête augmente sensiblement linéairement du fait de l'élasticité de la garniture d'appui-tête 5. A partir de l'instant $T_3$, la garniture d'appui - tête 5 est comprimée au maximum de façon que la tête 10 rencontre par la suite un obstacle rigide. L'accélération subie par la tête 10 augmente de façon beaucoup plus rapide à partir du troisième instant $T_3$, et jusqu'à un quatrième instant $T_4$, avant de diminuer à nouveau, ce qui correspond en fait à un rebond de la tête 10.

Entre l'instant initial $T_1$ et le troisième instant $T_3$, l'accélération subie par le thorax 8 varie sensiblement linéairement. A partir du troisième instant $T_3$, la garniture de dossier 4 est comprimée au maximum de façon que le thorax 8 rencontre un obstacle rigide et subit une accélération augmentant beaucoup plus fortement, sensiblement de la même façon que pour la tête 10. L'accélération subie par le thorax 8 atteint son maximum à un cinquième instant $T_5$ sensiblement antérieur au quatrième $T_4$ du maximum d'accélération atteint par la tête 10, puis l'accélération subie par le thorax diminue du fait d'un rebond du thorax.

Entre le second instants $T_2$, à partir duquel la tête rencontre l'appui-tête, et les quatrième et cinquième instants $T_4$ et $T_5$ de maximum d'accélération subie par la tête 10 et le thorax 8, la différence d'accélération subie par la tête 10 et le thorax 8 est sensiblement constante et correspond en fait à la compression et l'élasticité de la garniture de dossier 4. On comprend donc qu'en augmentant la souplesse de la garniture de dossier 4, au moins dans la partie haute du dossier, on peut limiter la différence d'accélération subie par la tête 10 et le thorax 8. Pour ce faire, on pourra par exemple prévoir un dossier 1 avec une partie supérieure munie d'une garniture plus souple qu'une partie inférieure du dossier, afin de conserver un maintien satisfaisant du bas du dos tout en limitant un effort de retenu de la partie supérieure du dos en cas de choc par l'arrière.

Grâce à l'invention, on obtient un ensemble de siège simple permettant de limiter, en cas de choc, les traumatismes subis par un occupant, notamment au niveau du coup. L'ensemble de siège améliore la sécurité de façon « passive », ce qui assure la fiabilité et la sécurité de fonctionnement.

**Revendications**

**1.** Ensemble de dossier de siège pour passager dans un véhicule automobile comprenant un dossier (1) et un appui tête (2), **caractérisé par le fait que** le dossier (1) et l'appui tête (2) comprennent chacun une structure rigide (3) recouverte respectivement par une garniture de dossier (4) et par une garniture d'appui-tête (5) compressibles contre la structure rigide (3), pour lequel on détermine des distances équivalentes à l'aide d'un mannequin point H défini par la norme SAE J826, SAE Standard vol. 3 1999, équipé d'un dispositif HRMD de mesure de position de tête par rapport à l'appui tête, le mannequin étant placé dans le siège réglé aux positions nominale spécifiées par le constructeur concernant la position longitudinale du siège sur ses glissières, le réglage de la hauteur d'assise du siège, le réglage en profondeur de l'appui-tête, le soutien lombaire et l'inclinaison du dossier du siège, ou, à défaut, placé dans le siège réglé en milieu de course pour la position longitudinale du siège sur ses glissières, le réglage de la hauteur d'assise du siège, et le réglage en profondeur de l'appui-tête, le soutien lombaire étant à défaut réglé à sa valeur minimale et l'inclinaison du dossier du siège étant à défaut réglée de manière à obtenir un angle entre le bassin et le torse du mannequin de 20 à 30°, dans tous les cas l'appui tête étant réglé de niveau avec le sommet du dispositif HRMD, les distances équivalentes déterminées étant les suivantes :

$$\text{une distance équivalente de dos } D\_dos = f + 0,7 \times e,$$

$$\text{une distance équivalente de tête } D\_tête = a + 0,7 \times b,$$

où (a+b) est la distance minimale selon une direction sensiblement horizontale, entre le dispositif HRMD et la structure rigide de l'appui tête,

(f+e) est la distance minimale selon une direction sensiblement horizontale, du dos du mannequin H à la structure rigide du dossier

b est l'épaisseur suivant l'horizontale de la garniture de tête en avant de la structure de l'appui tête, mesurée à la même hauteur qu'est évalué a+b

e est l'épaisseur suivant l'horizontale de la garniture de dos en avant de la structure du dossier, mesurée à la même hauteur qu'est évalué f+e,

dans lequel ensemble de dossier la valeur absolue de la différence entre la distance équivalente de dos et la distance équivalente de tête, est inférieure à 30mm, de façon que, de façon que, en cas de choc arrière subi par le véhicule, la tête et le corps de l'occupant sont bloqués par le dossier et l'appui-tête sensiblement au même instant.

## Claims

1. Seatback assembly for a passenger in a motor vehicle, comprising a seatback (1) and a head rest (2), **characterized in that** the seatback (1) and the head rest (2) each comprise a rigid structure (3) covered respectively by seatback upholstery (4) and by a headrest upholstery (5) that can be compressed against the rigid structure (3), for which the equivalent distances are determined with the aid of an H-point dummy defined by the SAE J826 standard, SAE Standard Vol. 3 1999, fitted with an HRMD device for measuring the position of the head relative to the head rest, the dummy being placed in the seat adjusted to the nominal positions specified by the manufacturer relating to the longitudinal position of the seat on its runners, the adjustment of the squab height of the seat, the depth adjustment of the head rest, the lumbar support and the inclination of the seatback, or, failing this, placed in the seat adjusted in mid-travel for the longitudinal position of the seat on its runners, the adjustment of seat squab height and the depth adjustment of the head rest, the lumbar support being as a default adjusted to its minimal value and the inclination of the seatback by default being adjusted so as to obtain an angle between the pelvis and the torso of the dummy of 20 to 30°, in any case the head rest being adjusted level with the top of the HRMD device, the determined equivalent distances being as follows:

$$\text{a back equivalent distance } D\ back = f+0.7 \times e,$$

$$\text{a head equivalent distance } D\ head = a+0.7 \times b.$$

where (a+b) is the minimal distance in a substantially horizontal direction between the HRMD device and the rigid structure of the head rest,

(f+e) is the minimal distance from the back of the H dummy to the rigid structure of the seatback,

b is the thickness along the horizontal of the head upholstery in front of the structure of the head rest, measured at the same height as a+b is evaluated,

e is the thickness along the horizontal of the back upholstery in front of the structure of the seatback, measured at the same height as f+e is evaluated,

in which seatback assembly the absolute value of the difference between the back equivalent distance and the head equivalent distance is less than 30 mm, so that, in the event of a rear impact sustained by the vehicle, the head and the body of the occupant are immobilized by the seatback and the head rest at substantially the same moment.

**Patentansprüche**

1. Sitzrückenlehneneinheit für einen Fahrgast in einem Kraftfahrzeug, die eine Rückenlehne (1) und eine Kopfstütze (2) enthält, **dadurch gekennzeichnet, dass** die Rückenlehne (1) und die Kopfstütze (2) je einen steifen Aufbau (3) enthalten, der mit einer Rückenlehnenverkleidung (4) bzw. mit einer Kopfstützenverkleidung (5) bedeckt sind, die gegen den steifen Aufbau (3) komprimierbar sind, bei der äquivalente Abstände mit Hilfe eines H-Punkt-Dummys bestimmt werden, der durch die Norm SAE J826, SAE Standard Vol. 3 1999 definiert wird, der mit einer HRMD-Vorrichtung zur Messung der Kopfstellung bezüglich der Kopfstütze ausgestattet ist, wobei der Dummy auf dem Sitz platziert wird, der gemäß den vom Hersteller spezifizierten Nennstellungen betreffend die Längsstellung des Sitzes auf seinen Gleitschienen, die Einstellung der Sitzflächenhöhe des Sitzes, die Tiefeneinstellung der Kopfstütze, die Lendenstütze und die Neigung der Rückenlehne des Sitzes eingestellt ist, oder stattdessen auf dem Sitz platziert wird, der auf halbem Weg für die Längsstellung des Sitzes auf seinen Gleitschienen, die Einstellung der Sitzflächenhöhe des Sitzes und die Tiefeneinstellung der Kopfstütze eingestellt ist, wobei die Lendenstütze stattdessen auf ihren Mindestwert eingestellt und die Neigung der Rückenlehne des Sitzes stattdessen so eingestellt ist, dass ein Winkel zwischen dem Becken und dem Oberkörper des Dummys zwischen 20 und 30° erhalten wird, wobei die Kopfstütze in allen Fällen auf gleicher Ebene mit dem Scheitel der HRMD-Vorrichtung eingestellt wird, wobei die bestimmten äquivalenten Abstände die folgenden sind:

$$\text{ein äquivalenter Rückenabstand } D\_Rücken = f + 0,7 \text{ x e,}$$

$$\text{ein äquivalenter Kopfabstand } D\_Kopf = a + 0,7 \text{ x b,}$$

wobei

(a+b)der Mindestabstand gemäß einer im Wesentlichen waagrechten Richtung zwischen der HRMD-Vorrichtung und dem steifen Aufbau der Kopfstütze ist,

(f+e)der Mindestabstand gemäß einer im Wesentlichen waagrechten Richtung des Rückens des Dummys H vom steifen Aufbau der Rückenlehne ist,

b die Dicke gemäß der Waagrechten der Kopfverkleidung vor dem Aufbau der Kopfstütze ist, gemessen in der gleichen Höhe, in der a+b ermittelt wird,

e die Dicke gemäß der Waagrechten der Rückenverkleidung vor dem Aufbau der Rückenlehne ist, gemessen in der gleichen Höhe, in der f+e ermittelt wird,

wobei in der Rückenlehneneinheit der Absolutwert der Differenz zwischen dem äquivalenten Rückenabstand und dem äquivalenten Kopfabstand geringer als 30 mm ist, so dass im Fall eines vom Fahrzeug erfahrenen Aufpralls von hinten der Kopf und der Körper des Insassen von der Rückenlehne und der Kopfstütze im Wesentlichen im gleichen Moment blockiert werden.

## FIG.1

## FIG.2

**EP 1 673 256 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19923909
- DE 3900495
- EP 0865960 A
- US 5580124 A

**Littérature non-brevet citée dans la description**

- *SAE Standard,* 1999, vol. 3